# EUROPÄISCHE PATENTANMELDUNG

(11) **EP 2 374 829 A1**
(43) Veröffentlichungstag der Anmeldung: **12.10.2011**
(21) Anmeldenummer: 10159245.9
(22) Anmeldetag: 07.04.2010
(51) Int. Cl.: C08G 64/14, C08K 5/13, C08K 5/50, C08L 69/00

(54) **Verzweigtes Schmelzepolycarbonat mit geringem Anteil an Fehlstrukturen**

(71) Anmelder: Bayer MaterialScience AG, 51368 Leverkusen (DE)
(72) Erfinder: Konrad, Stephan, Dr., 41541 Dormagen (DE); Heuer, Helmut Werner, Dr., 51371 Leverkusen (DE); Köhler, Karl-Heinz, Dr., 52078 Aachen-Brand (DE); Münnich, Christian, Dr., 51377 Leverkusen (DE); Wehrmann, Rolf, Dr., 47800 Krefeld (DE)

(57) **Zusammenfassung**

Gegenstand der Erfindung sind verzweigte aromatische Polycarbonate mit definierten Verhältnissen von Polymerketten-Verzweigungen und von Fehlstrukturen in der Polymerkette zu einander, sowie ein Verfahren zur Herstellung solcher verzweigten aromatischen Polycarbonate. Die Erfindung bezieht sich insbesondere auf solche verzweigten aromatischen Polycarbonate, die aufgrund ihres Herstellverfahrens durch Umesterung von Bisphenolen mit Diarylcarbonaten in der Schmelze neben den beabsichtigten Polymerkettenverzweigungen z. B. durch trifunktionelle Verzweigermoleküle noch Fehlstrukturen in der Polymerkette als unerwünschte Nebenprodukte enthalten. Solche Fehlstrukturen sind von nachteiligem Einfluß auf das rheologische Verhalten der so hergestellten Polycarbonate bei deren Verarbeitung in der Schmelze.

## Beschreibung

Gegenstand der Erfindung sind verzweigte aromatische Polycarbonate mit definierten Verhältnissen von Polymerketten-Verzweigungen und von Fehlstrukturen in der Polymerkette zu einander, sowie ein Verfahren zur Herstellung solcher verzweigten aromatischen Polycarbonate. Die Erfindung bezieht sich insbesondere auf solche verzweigten aromatischen Polycarbonate, die aufgrund ihres Herstellverfahrens durch Umesterung von Bisphenolen mit Diarylcarbonaten in der Schmelze neben den beabsichtigten Polymerkettenverzweigungen z. B. durch trifunktionelle Verzweigermoleküle noch Fehlstrukturen in der Polymerkette als unerwünschte Nebenprodukte enthalten. Solche Fehlstrukturen sind von nachteiligem Einfluß auf das rheologische Verhalten der so hergestellten Polycarbonate bei deren Verarbeitung in der Schmelze.

Die vorteilhaften Eigenschaften von gezielt verzweigten Polycarbonaten im Vergleich zu linearen Polycarbonaten werden insbesondere bei der thermoplastischen Verarbeitung dieser Werkstoffe genutzt. Polycarbonat (PC) wird unter anderem nach den Verfahren der Extrusion und des Spitzgusses verarbeitet. Bei der Extrusion liegen die auftretenden Scherraten im Bereich ≤ 1000 [1/s]; hier ist für eine gute Verarbeitbarkeit von Polycarbonatschmelzen zu extrudierten Artikeln eine hohe Viskosität der Polymerschmelze erforderlich. Es besteht daher bei der Entwicklung von verzweigten Polycarbonaten, die insbesondere für Extrusions-Anwendungen eingesetzt werden, ein Bedarf an Polycarbonaten mit einer ausreichend hohen Schmelzviskosität bei geringen Scherraten, das heißt also Polycarbonate mit einer ausgeprägten Strukturviskosität.

Verzweigtes Polycarbonat kann über verschiedene Prozesse hergestellt werden. Grosstechnische Bedeutung erlangte zunächst das über das Lösungspolymerisationsverfahren hergestellte Polycarbonat (LPC). Im LPC Prozess werden zur Verzweigung des PC höher- und hier vor allem trifunktionelle Bausteine wie z.B. 1,1,1-Tris(4-hydroxyphenyl)ethan (THPE), Isatinbiskresol (IBK), Trimellithsäure, u.a zugesetzt.

Das zweite großtechnisch eingesetzte Verfahren ist das Schmelzepolycarbonat (SPC) Verfahren. Polycarbonat, das nach dem sogenannten Schmelzumesterungsverfahren, auch Schmelzeverfahren genannt, aus organischen Carbonaten, wie z.B. Diarylcarbonaten, und Bisphenolen ohne Verwendung zusätzlicher Lösungsmittel in der Schmelze hergestellt wird, gewinnt zunehmend an wirtschaftlicher Bedeutung und ist daher für viele Einsatzgebiete ein geeignetes Material.

Die Herstellung aromatischer Polycarbonate nach dem Schmelzumesterungsverfahren ist bekannt und beispielsweise beschrieben in "Schnell", Chemistry and Physics of Polycarbonats, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymere Science and Engineering, Vol. 11,Second Edition, 1988, Seiten 648-718 und schließlich in Des. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299.

Es ist bekannt, dass die nach dem SPC-Prozeß hergestellten Polycarbonate Fehlstrukturen in der Polymerkette aufweisen. Die Art und Menge dieser Fehlstrukturen ist abhängig von verschiedenen Verfahrensparametern wie z. B. Temperatur, Verweilzeit und vor allem auch Art und Menge des eingesetzten Katalysators. Es ist weiterhin bekannt, das Alkali- und Erdalkali-Metallverbindungen die Bildung von Fehlstrukturen begünstigen (siehe z.B. EP 1369446 B1 und EP 1500671 A1).

Die Fehlstrukturen weisen unter anderem Xanthonstrukturen auf, welche für die Erniedrigung der Schmelzviskosität bei geringen Schergefällen verantwortlich sind. Daher sind insbesondere solche Fehlstrukturen, die Xanthon-Strukturen besitzen, im SPC unerwünscht.

Es bestand daher ein Bedarf an Schmelze-Polycarbonaten mit den vorteilhaften Eigenschaften von gezielten Polymerkettenverzweigungen, die durch mehrfunktionelle Monomere in der Polymersynthese bewirkt werden, aber ohne die nachteiligen rheologischen Eigenschaftsänderungen durch die unerwünschten Fehlstrukturen in der Polymerkette.

Es bestand daher der Bedarf, ein mit Hilfe von mehrfunktionellen Monomeren, vorzugsweise von trifunktionellen phenolischen Verbindungen und insbesondere bevorzugt mit Hilfe von THPE, in der Synthese gezielt verzweigtes SPC herzustellen, welches bei geringen Scherraten von beispielsweise ≤ 1000 [1/s] eine ausgeprägte Strukturviskosität aufweist und welches gleichzeitig möglichst geringe Mengen an Xanthon-Strukturen in der Polymerkette enthält. Das Verhältnis von gezielten Verzweigungen mit trifunktionellen Phenolen zu der Summe von unerwünschten Xanthon-Strukturen in der Polymerkette sollte dabei deutlich größer als 8, vorzugsweise größer als 15 sein.

Verzweigte Schmelzepolycarbonate und deren Herstellung unter Verwendung von trifunktionellen aromatischen Hydroxyverbindungen sind grundsätzlich bekannt. So wird in der US5597887(A) die Verwendung von THPE als Verzweiger in sehr großen Mengen von 2 Mol% und mehr zur Herstellung von Schmelzepolycarbonat beschrieben, das dann in einem zweiten Schritt mit unverzweigtem PC abgemischt und in der Schmelze äquilibriert wird, um ein blasverformbares Material zu ergeben. Das Schutzrecht macht keinerlei Aussagen über den Anteil oder die Vermeidung von Xanthon-Strukturen in der Polymerkette

Auch in den Schutzrechten JP-04-089824, JP-04-175368, JP-06-298925 und EP1472302A1 werden Verzweigungen von SPC mit THPE als Verzweiger beschrieben, jedoch gibt es hier keine Aussagen über das Verhältnis von Verzweigungen zu Xanthon-Strukturen in der Polymerkette.

Aufgabe der Erfindung war es also, ein einfaches Schmelze-Umesterungsverfahren ohne zusätzliche Verfahrensschritte zur Herstellung von geeignet verzweigten Polycarbonaten zu finden, das die Nachteile der oben zitierten Verfahren überwindet und mit dem das oben genannte Verhältnis von Verzweigungen zu Xanthon-Strukturen in der Polymerkette im SPC effizient eingestellt werden kann.

Überraschender Weise wurde gefunden, dass bei der Verwendung von speziell gereinigten Verzweigern, vorzugsweise von Trihydroxyaryl-Verbindungen und insbesondere von 1,1,1 -Tris(4-hydroxyphenyl)ethan (THPE) zur Herstellung von verzweigten Polycarbonaten im Schmelzumesterungsverfahren ein verzweigtes SPC entsteht, das deutlich weniger an Xanthon-Strukturen in der Polymerkette enthält, als solche Schmelzepolycarbonate, bei deren Herstellung im Schmelzumesterungsverfahren ein ungereinigter handelsüblicher Verzweiger verwendet wurde. Auf diese Weise können Schmelzepolycarbonate mit einem Verhältnis von Verzweigerstrukturen zu Xanthon-Strukturen in der Polymerkette von deutlich größer 8, vorzugsweise von größer 15 hergestellt werden. Die spezielle Reinigung des Verzweigers wird in Lösung an Kationenaustauschern vorgenommen.

Gegenstand der Erfindung sind daher verzweigte Schmelze-Polycarbonate mit Verhältnissen von Verzweigungsstrukturen zu Xanthon-Strukturen in der Polymerkette von größer 8, vorzugsweise von größer 15. Weiterer Gegenstand der Erfindung ist ein Schmelze-Polykondensationsverfahren zur Herstellung von verzweigten SPCs mit Verhältnissen von Verzweigungsstrukturen zu Xanthon-Strukturen in der Polymerkette von größer 8, vorzugsweise von größer 15, dadurch gekennzeichnet, dass der verwendete Verzweiger vor dem Einsatz in der Polykondensationsreaktion einem Reinigungsverfahren zum Beispiel an Kationenaustauschern, durch Destillation, durch Reinigung an einem Adsorbens oder Kristallisation unterzogen wird. Weiterer Gegenstand der Erfindung sind Zusammensetzungen von verzweigten Schmelze-Polycarbonaten mit Verhältnissen von Verzweigungsstrukturen zu Xanthon-Strukturen in der Polymerkette von 8 bis 200, bevorzugt von 10 bis 100, besonders bevorzugt von 15 bis 80, mit üblichen Additiven, wie z.B. Stabilisatoren, Entformungsmitteln, Fließhilfsmitteln, Antioxidantien, Farbmitteln, UV- und IR-Absorbern und/oder Mischungsbestandteilen, ausgewählt aus der Gruppe der Thermoplasten, der Elastomeren, der Flammschutzmittel und der Füll- und Verstärkungsstoffe.

Das erfindungsgemäß einzusetzende Polycarbonat wird durch die Schmelzumesterungsreaktion geeigneter Bisphenole und Kohlensäurediarylester in Gegenwart eines geeigneten Katalysators sowie Verzweiger hergestellt. Das Polycarbonat kann auch durch die Kondensation von Carbonatoligomeren, die Hydroxy- und/oder Carbonatendgruppen enthalten, und geeigneten Kohlensäurediarylestern und Bisphenolen hergestellt werden. Das erfindungsgemäß einzusetzende Polycarbonat kann auch nach einem Zweistufen-Verfahren durch Herstellung von Carbonatoligomeren in der oben genannten Schmelzumesterungsreaktion und durch anschließende Polykondensation dieser Carbonatoligomeren in fester feinteiliger Phase bei erhöhter Temperatur im Vakuum oder unter Durchleiten von heißen Inertgasen hergestellt werden.

Bevorzugte Carbonatoligomere werden durch die Formel (IV) mit Molekulargewichten von 153 bis 15.000 [g/mol] beschrieben, 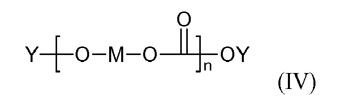 wobei die eckige Klammer sich n wiederholende Struktureinheiten bezeichnet,
M für Ar oder eine multifunktionelle Verbindung D steht,
wobei Ar eine Verbindung sein kann, die durch Formel (VIII) oder (IX) dargestellt wird, bevorzugt (IX) 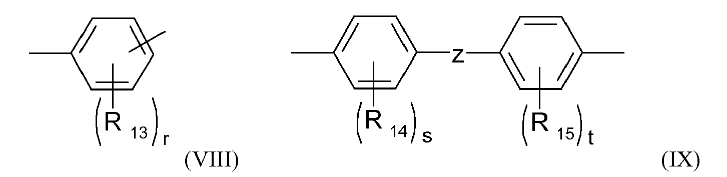 worin
- Z: C₁ bis C₈-Alkyliden oder C₅ bis C₁₂-Cycloalkyliden, S, SO₂ oder eine Einfachbindung ist,
- R₁₃, R₁₄, R₁₅: unabhängig voneinander ein substituiertes oder unsubstituiertes C₁ - C₁₈ Alkylrest ist, bevorzugt ein substituiertes oder unsubstituiertes Phenyl, Methyl, Propyl, Ethyl, Butyl, Cl oder Br ist und
- r, s, t: unabhängig voneinander für 0, 1 oder 2 steht,
- n: eine natürliche Zahl ist, wobei Verbindung D eine Verbindung der Formel 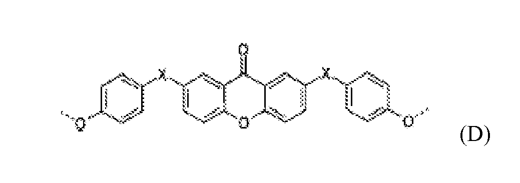 ist, und in Mengen von 5 bis 450 ppm bezogen auf das Polymer nach Total-Verseifung des Polycarbonats vorliegt (Gehalte bestimmt mittels HPLC nach alkalischer Hydrolyse) ,wobei Y = H oder eine Verbindung der Formel (X) 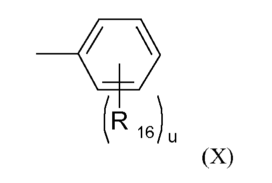
ist, wobei
- R₁₆: gleich oder verschieden H, C₁ bis C₂₀-Alkyl, C₆H₅ oder C(CH₃)₂C₆H₅, und
- u: 0, 1, 2 oder 3 sein kann,
wobei

X für eine Einfachbindung, C1- bis C6-Alkylen, C2- bis C5-Alkyliden oder C5- bis C6-Cycloallcyliden, welches mit C1- bis C6-Alkyl, vorzugsweise Methyl oder Ethyl substituiert sein kann, steht.

Bei Verbindung D handelt es sich um ein Xanthon-Derivat.

Geeignete Kohlensäurediarylester im Zusammenhang mit der Erfindung sind Di-C₆- bis Di-C₁₄-arylester, vorzugsweise die Diester von Phenol oder von alkyl- oder aryl-substituierten Phenolen, d.h. Diphenylcarbonat, Dikresylcarbonat und Di-4-tert-butylphenylcarbonat. Am meisten bevorzugt ist Diphenylcarbonat.

Zu den geeigneten Di-C₆ bis Di-C₁₄-arylestern gehören auch unsymmetrische Diarylester, die zwei verschiedene Arylsubstituenten enthalten. Bevorzugt sind Phenylkresylcarbonat und 4-tert-Butylphenylphenylcarbonat.

Zu den geeigneten Diarylestern gehören auch Gemische von mehr als einem Di-C₆ - C₁₄-arylester. Bevorzugte Gemische sind Gemische von Diphenylcarbonat, Dikresylcarbonat und Di-4-tert-butylphenylcarbonat.

Bezogen auf 1 Mol Diphenol, können die Kohlensäurediarylester in Mengen von 1,00 bis 1,30 Mol, besonders bevorzugt in Mengen von 1,02 bis 1,20 Mol und am meisten bevorzugt in Mengen von 1,05 bis 1,15 Mol verwendet werden.

Geeignete Dihydroxyarylverbindungen im Zusammenhang mit der Erfindung sind solche, die der Formel (V) entsprechen: 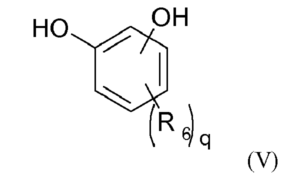 worin
- R₆: ein substituiertes oder unsubstituiertes Phenyl, Methyl, Propyl, Ethyl, Butyl, Cl oder Br ist und q für 0, 1 oder 2 steht.

Bevorzugte Dihydroxybenzolverbindungen sind 1,3-Dihydroxybenzol, 1,4-Dihydroxybenzol und 1,2-Dihydroxybenzol.

Geeignete Dihydroxydiarylverbindungen im Zusammenhang mit der Erfindung sind solche, die der Formel (VI) entsprechen: 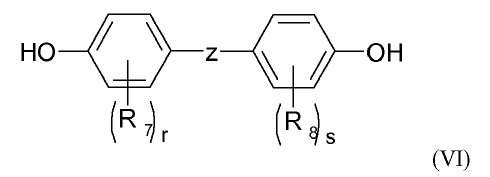 wobei
- Z: C₁ bis C₈-Alkyliden oder C₅ bis C₁₂-Cycloalkyliden, S, SO₂ oder eine Einfachbindung,
- R₇, R₈: unabhängig voneinander ein substituiertes oder unsubstituiertes Phenyl, Methyl, Propyl, Ethyl, Butyl, Cl oder Br ist und
- r, s: unabhängig voneinander für 0, 1 oder 2 steht.

Bevorzugte Diphenole sind 4,4'-Dihydroxydiphenyl, 4,4'-Dihydroxydiphenylsulfid, 1,1Bis(4-hydroxphenyl)cyclo-hexan, 1,2-Bis(4-hydroxyphenyl)benzol, 1,3-Bis(4-hydroxyphenyl)benzol, 1,4-Bis(4-hydroxyphenyl)benzol, Bis(4-hydroxyphenyl)methan, 2,2-Bis(4-hydroxyphenyl) propan, 2,4-Bis(4-hydroxyphenyl)-2-methylbutan, 2,2-Bis(3_methyl-4-hydroxy-phenyl)-propan, 2,2-Bis(3-chlor-4-hydroxyphenyl)propan, Bis(3,5-dimethyl-4-hydroxy-phenyl)methan, 2,2-Bis(3,5-dimethyl-4-hydroxyphenyl)propan, Bis(3,5-dimethyl-4-hydroxyphenyl)sulfon, Bis(4hydroxyphenyl)sulfon, 1,2-Bis[2-(4-hydroxyphenyl)isopropyl]benzol, 1,3-Bis[2-(4-hydroxyphenyl)isopropyl]benzol, 1,4-Bis[2(4hydroxyphenyl)isopropyl]benzol, 1,1-Bis(4-hydroxyphenyl)-1-phenylethan, 2,4-Bis(4-hydroxyphenyl)-2-methylbutan, 2,2-Bis-(3,5-dichlor-4-hydroxyphenyl)-propan, 2,2-Bis(3,5-dibrom-4-hydroxyphenyl)propan, 1,1-Bis(4-hydroxyphenyl)-3,3,5trimethylcyclohexan.

Die am meisten bevorzugten Diphenole sind 1,1-Bis(4-hydroxyphenyl)-1-phenylethan, 2,2-Bis(4-hydroxyphenyl)propan, 4,4'-Dihydroxydiphenyl, 1,1-Bis(4-hydroxyphenyl)-3,3,5-trimethylcyclohexan, 2,2-Bis(3,5-dibrom-4-hydroxyphenyl)propan und 1,3-Bis[2-(4-hydroxyphenyl)iso-propyl]benzol.

Zu den geeigneten Diphenolen gehören auch Gemische von mehr als einem Diphenol; dabei würde ein Copolycarbonat entstehen. Die am meisten bevorzugten Mischpartner sind 1,3-Bis[2-(4-hydroxyphenyl)isopropyl]benzol, 1,1-Bis(4-hydroxyphenyl)-3,3,5-trimethylcyclohexdan, 2,2-Bis(4-hydroxyphenyl)propan, 4,4'-Dihydroxydiphenyl und 2,2-Bis(3,5-dibrom-4-hydroxyphenyl)propan.

Zusätzlich werden neben den Diphenolen geeignete Verzweigungsmittel von 0,1 bis 3 mol%, vorzugsweise von 0,15 bis 2 mol% relativ zum Diphenol bzw. der Summe der Diphenole, hinzugefügt, wie z.B. Verbindungen, die drei oder mehr funktionelle OH-Gruppen oder Säuregruppen enthalten. Durch die Verzweigung wird das nicht-Newtonsche Fließverhalten erhöht und die Scherentzähung verstärkt. Zu den geeigneten Verzweigungsmitteln gehören Phloroglucin, 3,3-Bis(3-methyl-4-hydroxyphenyl)-2-oxo-2,3-dihydroindol, 4,6-Dimethyl-2,4,6-tris(4-hydroxyphenyl)hepten-2, 4, 6-Dimethyl-2,4,6-tris(4_hydroxyphenyl)-heptan, 1,3,5-Tris-(4-hydroxyphenyl)benzol, 1,1,1-Tris(4-hydroxyphenyl)ethan (THPE), Tris(4-hydroxyphenyl)phenylmethan, 2,2-Bis[4,4-bis(4-hydroxyphenyl)cyclohexyl]propan, 2,4-Bis-(4-hydroxyphenylisopropyl)phenol, 2,6-Bis(2-hydroxy-5'-methylbenzyl)-4-methylphenol, 2-(4-hydroxyphenyl)-2-(2,4-dihydroxyphenyl)-propan, Hexakis(4-(4-hydroxyphenylisopropyl)phenyl)orthoterephthalat, Tetrakis(4-hydroxyphenyl)methan, Tetrakis(4-(4-hydroxyphenylisopropyl)phenoxy)methan, 1,4-Bis((4',4"-dihydroxytriphenyl)methyl)benzol und Isatinbiskresol, Pentaerythrit, 2,4-Dihydroxybenzoesäure, Trimesinsäure, Cyanursäure.

Bevorzugte Verzweigungsmittel sind Tris-Hydroxyaryl-Verbindungen, besonders bevorzugtes Verzweigungsmittel ist THPE.

Das erfindungsgemäß verwendete Verzweigungsmittel wird dabei durch geeignete Reinigungsverfahren, insbesondere durch Behandlung mit Kationenaustauschern von darin enthaltenen Nebenprodukten befreit, die bei der Schmelze-Polykondensation von SPC die Bildung von Xanthon-Strukturen in der Polymerkette auslösen können.

Zur Herstellung der erfindungsgemäßen Polycarbonate geeignete Katalysatoren sind beispielsweise solche der allgemeinen Formel (VII) 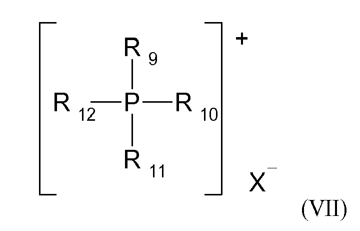 worin
- R₉, R₁₀, R₁₁ und R₁₂: unabhängig voneinander die gleichen oder verschiedene C₁- bis C₁₈-Alkylene, C₆ bis C₁₀-Aryle oder C₅ bis C₆-Cycloalkyle bezeichnen können und
- X⁻: für ein Anion stehen kann, bei dem das entsprechende Säure-Base-Paar H⁺ + X⁻ → HX ein pK_{b} von < 11 hat.

Bevorzugte Katalysatoren sind Tetraphenylphosphoniumfluorid, Tetraphenylphosphoniumtetraphenylborat und Tetraphenylphosphoniumphenolat. Am meisten bevorzugt ist Tetraphenylphosphoniumphenolat. Bevorzugte Mengen an Phosphoniumsalzkatalysatoren sind beispielsweise 10⁻² bis 10⁻⁸ Mol pro Mol Diphenol und die am meisten bevorzugten Katalysatormengen sind 10⁻⁴ bis 10⁻⁶ Mol pro Mol Diphenol.

Die Polycarbonate können stufenweise hergestellt werden, die Temperaturen können stufenweise im Bereich von 150 bis 400°C durchgeführt werden, die Verweilzeit in jeder Stufe kann 15 Minuten bis 5 Stunden betragen, und die Drücke in jeder Stufe können 1000 bis 0,01 mbar betragen. Besonders bevorzugt nimmt die Temperatur von einer Stufe zur anderen zu und der Druck von einer zur nächsten Stufe ab. Der Zugabezeitpunkt des Verzweigungsmittels ist nicht limitiert, es kann vor jeder Stufe des Verfahrens hinzugegeben werden, am Anfang so wie vor der letzten Stufe.

Die erfindungsgemäß verzweigten Schmelze-Polycarbonate können ebenfalls hergestellt werden durch Mischen und Homogenisieren von geeigneten verzweigten Polycarbonaten mit geeigneten überwiegend linearen Polycarbonaten in der Polymerschmelze in definierten Verhältnissen zueinander.

Die bevorzugt verwendeten Schmelzepolycarbonate sind gekennzeichnet durch die allgemeine Formel (IV) 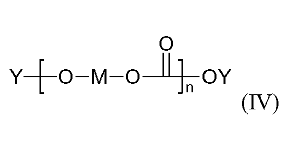 wobei Y = H oder ein unsubstituierter oder substituierter Arylrest ist und n und M den entsprechenden Größen entsprechen, die bereits in dieser Anmeldung erläutert sind.

Das erfindungsgemäße eingesetzte Polycarbonat kann ein durch Gelpermeationschromatographie bestimmtes Mittel des Molekulargewichts von 5.000 bis 80.000, vorzugsweise 10.000 bis 70.000 und in am meisten bevorzugter Weise 15.000 bis 60.000 aufweisen.

Vorzugsweise hat Ar die folgende Bedeutung:

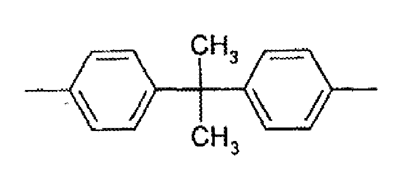

Vorzugsweise ist die Verbindung D die Verbindung D1: 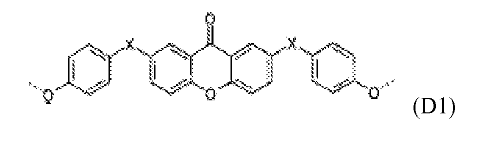 mit X= Isopropyliden-Rest.

Die zuvor beschriebenen Schmelzepolycarbonate sind nur beispielhaft genannt. Die Anteile der Komponente D1 sind in Summe in Mengen 5 - 450 mg/kg im Schmelzepolycarbonat enthalten.

Zur weiteren Verbesserung des Fließverhaltens oder anderen Eigenschaftsverbesserungen wie der Stabilität gegenüber UV-Licht und der Stabilität bei der Thermolagerung können in das erfindungsgemäße verzweigte SPC Additive eingebracht werden z.B. organische Phosphorverbindungen, Entformungsmittel, UV-Absorber, aromatische Antioxidantien wie sterisch gehinderte Phenole. Erfindungsgemäß geeignete organische Phosphorverbindungen sind beispielsweise Phosphine, Phosphinoxide, Phosphinite, Phosphonite, Phosphite, Diphosphine, Diphosphinite, Diphosphonite, Diphosphite, Phosphinate, Phosphonate, Phosphate, Diphosphonate und Diphosphatverbindungen sowie die oligomeren Derivate der zuvor genannten Phosphorverbindungen.

Erfindungsgemäß optional verwendete Phosphine sind Verbindungen der allgemeinen Formel (I): 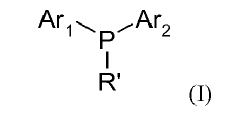
- wobei: Ar₁ und Ar₂ gleiche oder unterschiedliche unsubstituierte oder substituierte Arylreste sind und
- R': ein unsubstituierter oder substituierter Arylrest oder einer der folgenden Reste (Ia) bis (Ih) ist 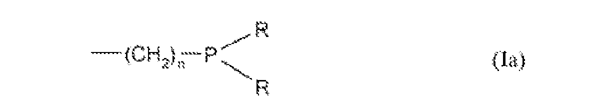 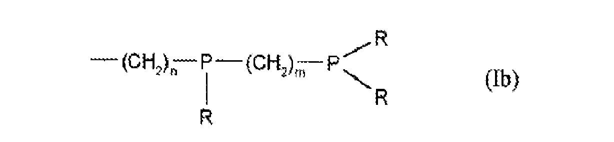 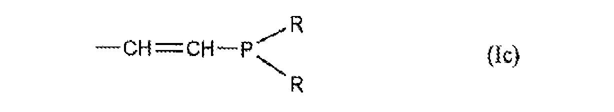 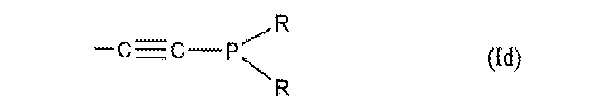 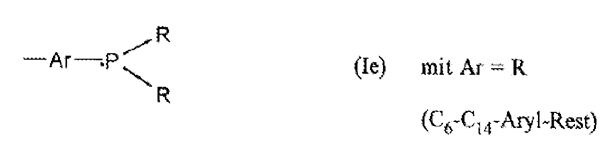 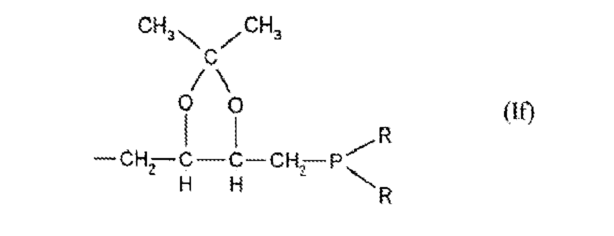 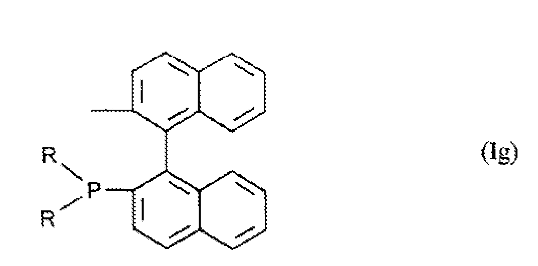 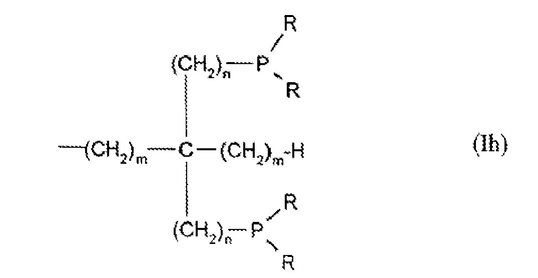
in denen
- R: ein unsubstituierter oder substituierter C6-C14-Aryl-Rest ist, und
- n und m: jeweils unabhängig voneinander eine ganze Zahl von 1 bis 7 sind, und wobei die H-Atome der Reste (Ia) bis (Ic) noch durch Substituenten ersetzt sein können und
wobei
- R': noch 4-Phenyl-phenyl oder a-Naphthyl sein kann, wenn beide Ar's in Formel (I) jeweils ebenfalls 4-Phenyl-phenyl oder α -Naphthyl sind. Hierbei können die 4-Phenyl-phenyl- und die α-Naphthyl-Reste noch Substituenten tragen.

Bevorzugte Reste Ar in (1) sind Phenyl, 4-Phenyl-phenyl und Naphthyl.

Geeignete Substituenten der Arylreste Ar in (1) sind F, CH3, CI, Br, J, OCH3, CN, OH, Alkylcarboxy, Phenyl, Cycloalkyl, Alkyl.

Geeignete Substituenten für die H-Atome der Reste (Ia) bis (Ic) sind F, CH₃, Alkyl, Cycloalkyl, Cl, Aryl.

Bevorzugte Zahlen "n" und "m" sind 1, 2, 3 oder 4.

Aryl steht jeweils unabhängig für einen aromatischen Rest mit 4 bis 24 Gerüstkohlenstoffatomen, in denen keines, ein, zwei oder drei Gerüstkohlenstoffatome pro Zyklus (aromatischer Ring aus C-Atomen), im gesamten Molekül mindestens jedoch ein Gerüstkohlenstoffatom, durch Heteroatome, ausgewählt aus der Gruppe Stickstoff, Schwefel oder Sauerstoff, substituiert sein können. Vorzugsweise bedeutet Aryl jedoch einen carbozyklischen aromatischen Rest mit 6 bis 24 Gerüstkohlenstoffatomen. Gleiches gilt für den aromatischen Teil eines Arylalkyl-Restes sowie für Arylbestandteile komplexerer Gruppen, (wie z.B. Aryl-carbonyl- oder Aryl-sulfonyl-Resten.)

Beispiele für C₆-C₂₄-Aryl sind Phenyl, o-, p-, m-Tolyl, Naphthyl, Phenanthrenyl, Anthracenyl oder Fluorenyl, Beispiele für heteroaromatisches C₄-C₂₄-Aryl in denen keines, ein, zwei oder drei Gerüstkohlenstoffatome pro Zyklus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Indazolyl, Chinolyl, Isochinolyl, Naphthyridinyl, Chinazolinyl, Benzofuranyl oder Dibenzofuranyl.

Erfindungsgemäß geeignete Phosphine sind z.B. Triphenylphosphin, Tritolylphosphin, Tri-p-tert.-butylphenylphosphin oder deren Oxide. Bevorzugt wird als Phosphin Triphenylphosphin eingesetzt.

Beispiele für die erfindungsgemäß einzusetzenden Diarylphosphine sind 1 ,2-Bis-(dipentafluorphenyl-phosphino)-ethan, Bis-(diphenyl-phosphino)-acetylen, 1,2-Bis-(diphenyl-phosphino)-benzol, 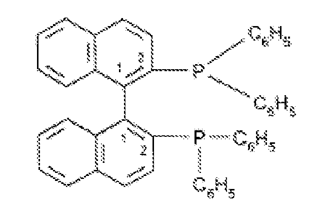 [2,2`-Bis-(diphenylphosphino)- 1,1'-binaphthyl], 2,3-Bis-(diphenylphosphino)-butan, 1,4-Bis-(diphenylphosphino)-butan, 1,2-Bis-(diphenylphosphino)-ethan, cis-1,2-Bis-(diphenylphosphino)-ethylen. 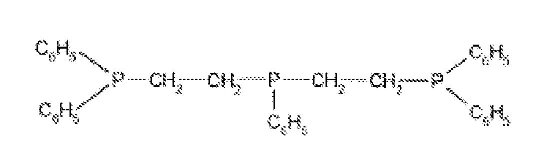 [Bis-(2-(diphenylphosphino)-ethyl)-phenylphosphin], Bis-(diphenylphosphino)-methan, 2,4-Bis-(diphenylphosphino)-pentan, 1 ,3-Bis-(diphenylphosphino)-propan, 1,2-Bis-(diphenylphosphino)-propan, 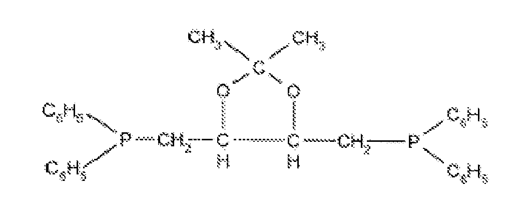 [4,5-O-Isopropyliden-2,3-dihydroxy-1,4-bis-(diphenylphosphino)-butan], Tri-(4-diphenyl)-phosphin und Tris-(α-naphthyl)-phosphin.

Die Diarylphosphine können nach den folgenden Literaturhinweisen hergestellt werden:
Issleib et al., Chem. Ber., 92(1959), 3175, 3179 und Hartmann et al., Zeitschr. Anorg. Ch. 287(1956) 261, 264.

Es können auch Mischungen aus verschiedenen Phosphinen verwendet werden. Die verwendeten Phosphine werden in Mengen von 10 bis 2000 mg/kg, bevorzugt von 50 bis 800 mg/kg, besonders bevorzugt von 100 bis 500 mg/kg, bezogen auf das Gesamtgewicht der Zusammensetzung, eingesetzt.

Die erfindungsgemäßen Formmassen können neben den eingesetzten Phosphinen auch die entsprechenden Phosphinoxide enthalten.

Erfindungsgemäß können optional grundsätzlich beliebige aromatische oder aliphatische Phosphite oder Diphosphite eingesetzt werden. Am meisten bevorzugte Phosphite und Diphosphite sind beispielsweise Triphenylphosphit, Tris(2-tert.-butylphenyl)-phosphit, Tris(2,4-di-tert.-butylphenyl)-phosphit, Tris(2,6-di-tert.-butylphenyl)-phosphit, Tris(2,4,6-tri-tert.-butylphenyl)-phosphit, Tris(2,4,6-tri-tert.-butylphenyl)phosphit, Tris(2,4,6-tri-tert.-butylphenyl)-(2-butyl2-ethyl-propan-1,3-diyl)phosphit, bis(2,4-di-cumyl-phenyl)-pentaerythritdiphosphit, bis(2,4-di-tert.-butylphenyl)-pentaerythritdiphosphit, Distearylpentaerythritdiphosphit, Tris(p-nonylphenyl)phosphit, Diphenylisodecyl-phosphit, Diisodecylphenylphsophit, Triisodecylphosphit, Trilaurylphosphit und Tris[(3-ethyloxethanyl-3)methyl]phosphit.

Erfindungsgemäß können optional grundsätzlich beliebige organische UV-Absorber B) eingesetzt werden. Bevorzugt sind die UV-Absorber ausgewählt aus der Gruppe, die aus den Triazinen, Benzotriazolen, Benzophenonen Cyanacrylaten und Malonestern besteht.

Beispiele für geeignete UV-Absorber sind:
a) Benzotriazol-Derivate nach Formel (II): 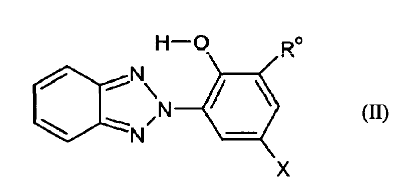 In Formel (II) sind R° enthaltend und X gleich oder verschieden und bedeuten H oder Alkyl oder Alkylaryl.
   Bevorzugt sind dabei Tinuvin® 329 mit X = 1,1,3,3-Tetramethylbutyl und R° = H, Tinuvin® 350 mit X = tert-Butyl und R0 = 2-Butyl und Tinuvin® 234 mit X und R° = 1,1-Dimethyl-1-phenyl
b) Dimere Benzotriazol-Derivate nach Formel (IIa): 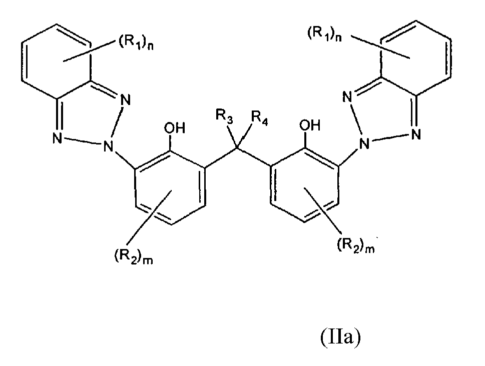 In Formel (IIa) sind R1 und R2 gleich oder verschieden und bedeuten H, Halogen, C1- C10-Alkyl,
   C5- C10-Cycloalkyl, C7-C13 -Aralkyl, C6-C14 -Aryl, -OR5 oder -(CO)-O-R 5 mit R5 = H oder C1-C4-Alkyl.
   In Formel (IIa) sind R3 und R4 ebenfalls gleich oder verschieden und bedeuten H, C1-C 4-Alkyl, C5-C6-Cycloalkyl, Benzyl oder C6-C14-Aryl.
   In Formel (IIa) bedeuten m 1,2 oder 3 und n 1,2,3 oder 4.
   Bevorzugt ist dabei Tinuvin® 360 mit R1 = R3 = R4 = H; n = 4; R2 = 1,1,3,3-Tetramethylbutyl;
   m=1
bl) Dimere Benzotriazol-Derivate nach Formel (IIb): 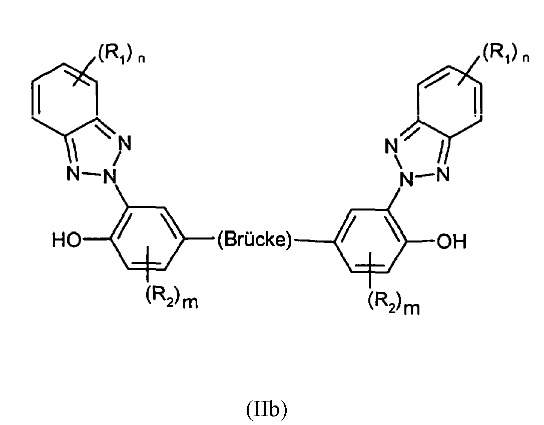 worin die Brücke 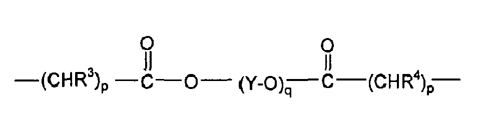 bedeutet, R , R , m und n die für Formel (IIb) genannte Bedeutung haben, und worin p eine ganze Zahl von O bis 3 ist, q eine ganze Zahl von 1 bis 10 ist, Y gleich -CH2-CH2-, -(CH2)3-, -(CH2)4-, -(CH2)5-, -(CH2)6-, oder CH(CH3)-CH2-ist und R3 und R4 die für Formel (IIb) genannte Bedeutung haben.
   Bevorzugt ist dabei Tinuvin® 840 mit R1 = H; n = 4; R2 = tert-Butyl; m = 1; R2 ist in ortho-Stellung zur OH-Gruppe angebracht; R3 = R4 = H; p = 2; Y = -(CH2)5-; q = 1
c) Triazin-Derivate nach Formel (IIc): 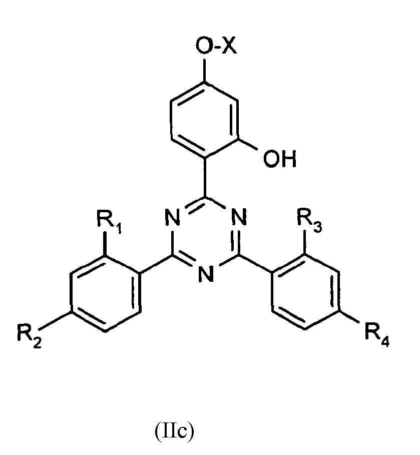 worin R1, R2, R3, R4 gleich oder verschieden sind und H, Alkyl, CN oder Halogen sind und X gleich Alkyl ist.
   Bevorzugt ist dabei Tinuvin® 1577 mit R1 = R2 = R3 = R4 = H; X = Hexyl sowie Cyasorb® UV-1 164 mit R1 = R2 = R3 = R4 = Methyl; X Octyl
d) Triazin-Derivate der folgenden Formel (IId): 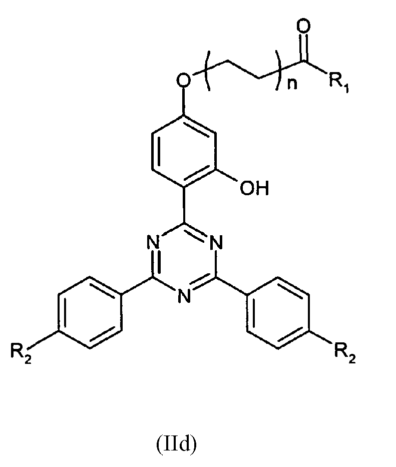 worin R1 gleich C1 Alkyl bis C17-Alkyl bedeutet, R2 gleich H oder C1-Alkyl bis C4-Alkyl bedeutet und n gleich 0 bis 20 ist.
e) Dimere Triazin-Derivate der Formel (IIe): 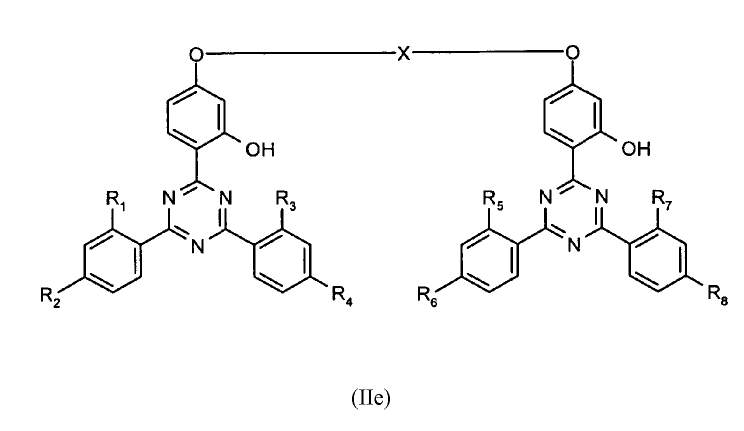 worin R1, R2, R3, R4, R5, R6, R7, R8 gleich oder verschieden sein können und H, Alkyl, CN oder Halogen bedeuten und X gleich Alkyliden, vorzugsweise Methyliden oder -(CH2 CH2-O-)n-C(=O)- ist und n für 1 bis 10, vorzugsweise 1 bis 5, insbesondere 1 bis 3.
f) Diarylcyanoacrylate der Formel (IIf): 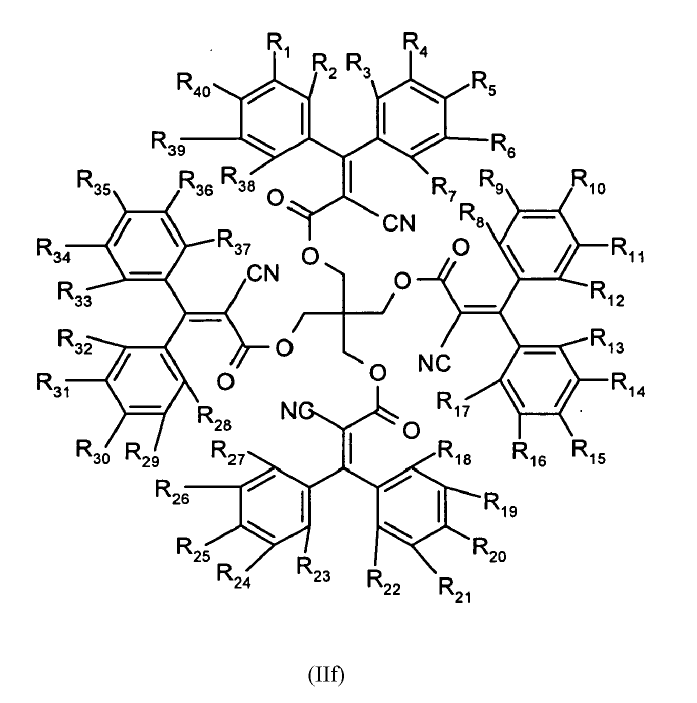 worin R bis R40 gleich oder verschieden sein können und H, Alkyl, CN oder Halogen bedeuten.
   Bevorzugt ist dabei Uvinul® 3030 mit R1 bis R40 = H.
g) Malonester der Formel (IIg): 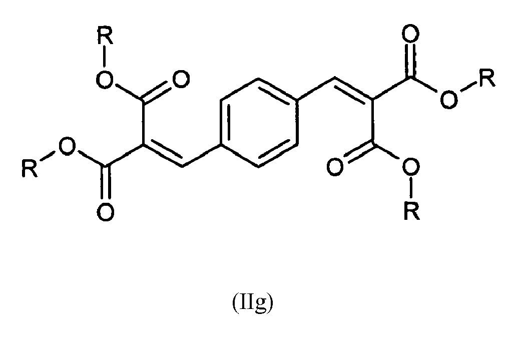 worin R Alkyl bedeutet. Bevorzugt steht R für C1-C6-Alkyl, insbesondere für C1-C4-Alkyl und besonders bevorzugt für Ethyl.

Besonders bevorzugte UV-Stabilisatoren für die erfindungsgemäßen Formmassen sind Verbindungen aus der Gruppe der Benzotriazole (a, b und c), aus der Gruppe der Malonester (g) und aus der Gruppe der Cyanacrylate (f).

Die UV-Stabilisatoren werden eingesetzt in Mengen von 0,01 Gew.-% bis 15 Gew.-% bezogen auf die Formmasse, bevorzugt im Mengen von 0,05 Gew.-% bis 1 Gew.-%, besonders bevorzugt in Mengen von 0,1 Gew.-% bis 0,4 Gew.-% bezogen auf die Formmasse.

Die Einarbeitung solcher UV-Absorber in die zu verwendenden, erfindungsgemäßen Zusammensetzungen erfolgt nach üblichen Methoden, beispielsweise durch direktes Vermischen der UV-Absorber in fester oder flüssiger Form mit der Schmelze der Formmassen in bekannten Mischaggregaten, wie z.B. Extrudern oder Knetern, gegebenenfalls zusätzlich in Kombination mit statischen Mischern. Die Vermischung kann vorzugsweise auch durch eine Vordispergierung der UV-Absorber in einem Polymerschmelzestrom z.B. in mit einander verbunden Mischaggregaten aus z.B. einem Seitenextruder in Kombination mit einer Schmelzeaustragsvorrichtung durchgeführt werden. Die Vordispergierung der UV-Absorber kann z.B. auch durch getrennte Herstellung eines Masterbatches von bis zu 15 Gew.-% an UV-Absorber in einem Schmelzepolycarbonat erfolgen. Ein solches Masterbatch kann der Schmelze der Formmassen entweder direkt oder über ein Mischaggregat zugesetzt werden.

Erfindungsgemäß optional verwendete Alkylphosphate C) sind Verbindungen der allgemeinen Formel (XI): 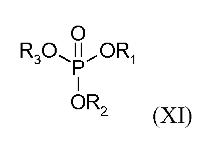 wobei R₁ bis R₃ H, gleiche oder unterschiedliche linerare, verzweigte oder zyklische Alkylreste sein können. Besonders bevorzugt sind C₁-C₁₈ Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäß geeignete Alkylphosphate sind z.B. Mono-, Di- und Trihexylphosphat, Triisoctylphosphat und Trinonylphosphat. Bevorzugt wird als Alkylphosphat Triisooctylphosphat (Tris - 2-ethyl-hexyl-phosphat) verwendet. Es können auch Mischungen aus verschiedenen Mono-, Di- und Trialkylphosphaten verwendet werden.

Die verwendeten Alkylphosphate werden in Mengen von 0 bis 500 mg/kg, bevorzugt von 0,5 bis 500 mg/kg, besonders bevorzugt 2 bis 500 mg/kg, bezogen auf das Gesamtgewicht der Zusammensetzung eingesetzt.

Erfindungsgemäß optional verwendete aliphatische Carbonsäureester D) sind Ester aliphatischer langkettiger Carbonsäuren mit ein- oder mehrwertigen aliphatischen und/oder aromatischen Hydroxyverbindungen. Besonders bevorzugt verwendete aliphatische Carbonsäureester sind Verbindungen der allgemeinen Formel (III):

(R₄-CO-O)ₒ-R₅-(OH)ₚ mit o = 1 bis 4 und p = 3 bis 0 (III)

wobei R₄ ein aliphatischer gesättigter oder ungesättigter, linearer, cyclischer oder verzweigter Alkylrest ist und R₅ ein Alkylenrest eines 1- bis 4-wertigen aliphatischen Alkohols R₅-(OH)ₒ₊ₚ ist.

Besonders bevorzugt für R₄ sind C₁-C₁₈ Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Alkylen steht für einen geradkettigen, zyklischen, verzweigten oder unverzweigten C₁-C₁₈ AlkylenRest. C₁-C₁₈-Alkylen steht beispielsweise für Methylen, Ethylen, n-Propylen, iso-Propylen, n-Butylen, n-Pentylen, n-Hexylen, n-Heptylen, n-Octylen, n-Nonylen, n-Decylen, n-Dodecylen, n-Tridecylen, n-Tetradecylen, n-Hexadecylen oder n-Octadecylen.

Bei Estern von mehrwertigen Alkoholen können auch freie, nicht veresterte OH-Gruppen vorhanden sein. Erfindungsgemäß geeignete aliphatische Carbonsäureester sind z.B.: Glycerinmonostearat, Palmitylpalmitat, und Stearylstearat. Es können auch Gemische verschiedener Carbonsäureester der Formel (III) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrit-tetrastearat, Glycerinmonostearat, Stearylstearat und Propandioldistearat, bzw. Gemische daraus.

Die Carbonsäureester werden in Mengen von 0 bis 12000 mg/kg, bevorzugt von 500 bis 10000 mg/kg, besonders bevorzugt von 2000 bis 8000 mg/kg, bezogen auf das Gesamtgewicht der Zusammensetzung eingesetzt.

Geeignete optional zu verwendende sterisch gehinderte Phenole sind zum Beispiel Ester von β-(3,5-Di-tert.-butyl-4-hydroxyphenyl)propionsäure oder β-(5-tert.-Butyl-4-hydroxy-3methylphenyl)-propionsäure oder β-(3,5-Dicyclohexyl-4-hydroxyphenyl)propionsäure mit ein oder mehrwertigen Alkoholen, z. B. mit Methanol, Ethanol, Butanol, n-Octanol, i-Octanol, n-Octadecanol. 1,6-Hexandiol, 1,9-Nonandiol, Ethylenglycol, 1,2-Propandiol, Neopentylglycol, Thiodiethylenglycol, Diethylenclycol, Triethylenglycol, Pentaerythrit, Tris.-(hydroxyethyl)isocyanurat, N,N'-Bis(Hydroxyethyl)oxamid, 3-Thiaundecanol, 3-Thiapentadecanol, Trimethylhaexandiol, Trimethylolpropan, 4-Hydroxymethyl-1-phospha-2,6,7-trioxabicyclo[2.2.2]octan.

Besonders bevorzugt wird als sterisch gehindertes Phenol n-Octadecyl-3-(3,5-di-t.butyl-4-hydroxyphenyl)-propionat verwendet. Das sterisch gehindertes Phenol wird bevorzugt in Mengen von 10 bis 800 mg/kg, besonders bevorzugt von 30 bis 700 mg/kg, ganz besonders bevorzugt von 40 bis 600 mg/kg bezogen auf das Gesamtgewicht der Zusammensetzung eingesetzt.

Die erfindungsgemäßen Zusammensetzungen (Schmelzepolycarbonat-Formmassen) können beispielsweise hergestellt werden, indem man die jeweiligen Bestandteile in bekannter Weise vermischt und bei Temperaturen von 200°C bis 400°C in üblichen Aggregaten wie Innenknetern, Extrudern und Doppelwellenschnecken schmelzcompoundiert und schmelzextrudiert. Die Vermischung der einzelnen Bestandteile kann sowohl sukzessive als auch simultan erfolgen und zwar sowohl bei etwa 20°C (Raumtemperatur) als auch bei höherer Temperatur. Die erfindungsgemäß eingesetzten Verbindungen können aber auch separat in unterschiedlichen Stadien des Herstellprozesses in die Schmelzepolycarbonat-Formmasse eingebracht werden. So können z.B. das Alkylphosphat und / oder das Phosphin und /oder Phosphit bereits während oder am Ende der Polykondensation in das Schmelzepolycarbonat eingebracht werden, bevor aliphatische Carbonsäureester hinzugesetzt werden.

Die Zugabeform der erfindungsgemäßen Verbindungen ist nicht limitiert. Die erfindungsgemäßen Verbindungen bzw. Mischungen der erfindungsgemäßen Verbindungen können als Feststoffe, z.B. als Pulver, in Lösung oder als Schmelze der Polymerschmelze zugesetzt werden. Bevorzugt erfolgt die Dosierung der organischen Phosphorverbindungen und der aliphatischen Carbonsäureester über einen Seitenextruder hinter der letzten Polykondensationsstufe. Im großtechnischen Ausführungsformen wird besonders bevorzugt ein Seitenextruder mit einem Durchsatz von beispielsweise 200 -1000 kg Polycarbonat pro Stunde betrieben.

Die Zugabe der UV-Absorber erfolgt bevorzugt in flüssiger Form bei einer Temperatur von ca. 80 bis 250°C hinter den Trichter der Polycarbonat-Aufgabe in eine Zone des Seitenextruders, die mit Mischelementen ausgestattet ist. Dabei erfolgt die Entnahme der UV-Absorber aus einer Ringleitung, die bevorzugt auf einen Druck von 2-20 bar bevorzugt bei einer Temperatur von 80 - 250 °C gehalten wird. Die zugesetzte Menge kann über ein Regelventil gesteuert werden. In einer anderen bevorzugten Ausführungsform erfolgt die Zugabe der UV-Absorber als Feststoff in den Trichter der Polycarbonat-Aufgabe des Seitenextruders.

In einer bevorzugten Ausführungsform erfolgt die optionale Dosierung von Alkylphosphaten beispielsweise bei Raumtemperatur in flüssiger Form gemeinsam mit Polycarbonat in den Trichter der Polycarbonat-Aufgabe des Seitenextruders. Die Menge an Alkylphosphat wird z.B. mit Hilfe einer Membranpumpe oder einer anderen geeigneten Pumpe dosiert. Die Zugabe von Phosphinen und des sterisch gehinderten Phenols erfolgt bevorzugt in flüssiger Form bei einer Temperatur von ca.

80 bis 250°C hinter den Trichter der Polycarbonat-Aufgabe in eine Zone des Seitenextruders, die mit Mischelementen ausgestattet ist. Dabei erfolgt die Entnahme der Phosphine aus einer Ringleitung, die bevorzugt auf einen Druck von 2-20 bar bevorzugt bei einer Temperatur von 80 - 250 °C gehalten wird. Die zugesetzte Menge kann über ein Regelventil gesteuert werden.

Besonders bevorzugt kann hinter dem Seitenextruder eine Zahnradpumpe zur Druckerhöhung installiert werden. Die verwendeten Carbonsäureester können bevorzugt hinter dem Seitenextruder und vor den statischen Mischer mit einer Membranpumpe oder einer anderen geeigneten Pumpe zudosiert werden. Die Carbonsäureester werden dann bevorzugt in flüssiger Form besonders bevorzugt bei 80-250°C mit einer Membranpumpe bei erhöhtem Druck, besonders bevorzugt von 50 - 250 bar, hinter die Zahnradpumpe dosiert. Alternativ können die Carbonsäureester auch in die Mischzone des Seitenextruders über ein Regelventil in den Schmelzestrom eingetragen werden.

In einer besonders bevorzugten Ausführungsform befindet sich hinter dem Seitenextruder und allen Additiv-Dosierstellen ein statischer Mischer, um eine gute Durchmischung aller Additive zu gewährleisten. Die Polycarbonat-Schmelze des Seitenextruders wird dann in den Polycarbonat-Hauptschmelzestrom eingetragen. Die Vermischung des Hauptschmelzestroms mit dem Schmelzestrom des Seitenextruders erfolgt über einen weiteren statischen Mischer.

Alternativ zur Flüssigdosierung können die Additive in Form eines Masterbatches (Konzentrat der Additive in Polycarbonat) oder in reiner, fester Form über den Trichter der Polycarbonataufgabe des Seitenextruders dosiert werden. Ein solches Masterbatch kann weitere Additive enthalten. Alle Additive können auch nachträglich zum Beispiel durch Compoundierung in das Polycarbonat eingebracht werden.

Die erfindungsgemäßen Formmassen können zur Herstellung von Formkörpern jeder Art verwendet werden.

Diese können vorzugsweise durch Extrusion und Blasformverfahren, aber auch in entsprechender Modifikation durch Spritzguss hergestellt werden. Eine weitere Form der Verarbeitung ist die Herstellung von Formkörpern durch Tiefziehen aus zuvor hergestellten Platten oder Folien.

Beispiele der erfindungsgemäßen Formkörper sind Profile, Folien, Gehäuseteile jeder Art, z.B. für Haushaltsgeräte wie Saftpressen, Kaffeemaschinen, Mixer; für Büromaschinen wie Monitore, Drucker, Kopierer; für Platten und deren Coextrusionsschichten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden.

Die erfindungsgemäßen Formkörper können transparent, translucent oder opak sein. Weitere Formkörper sind insbesondere optische und magnetooptische Datenspeicher wie Mini Disk, Compact Disk (CD) oder Digital Versatile Disk (DVD), Lebensmittel- und Getränkeverpackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten.

### Beispiele

### Charakterisierung der erfindungsgemäßen Formmassen (Testmethoden):

### Schmelzviskosität

Die Bestimmung der rheologischen Eigenschaften geschieht durch die Messung der Schmelzviskosität der erfindungsgemäßen Formmassen in [Pa·s] bei Temperaturen von 320°C in Abhängigkeit vom Schergefälle (eta), das von 100 bis 1000 [1/s] variieret wurde. Die Messung erfolgt nach ISO 11443 mit Hilfe eines Kapillarrheometers.

### Bestimmung der relativen Viskosität (Etarel.):

Die relative Lösungsviskosität Etarel, wird bestimmt in Methylenchlorid (0,5 g Polycarbonat/1) bei 25°C in einem Ubbelohde Viskosimeter.

### Molekulargewichtsmittel (Mw)

Die Bestimmung des Molekulargewichtsmittels Mw erfolgt an einer 0,2 prozentigen Lösung des Polymers in Dichlormethan mittels Gelpermeationschromatographie (GPC) und UV-Detektion. Die Kalibrierung der GPC erfolgt mit linearen PC-Standards.

### Schmelze-Volumenfließrate (MVR)

Die Bestimmung der Schmelze-Volumenfließrate (MVR) erfolgt bei 300°C und 1,2 kg Belastung mit einem Schmelzindexprüfgerät nach ISO 1133.

### Verbindungen D 1

Die Bestimmung der Konzentration der Verbindungen D1 erfolgt nach alkalischer Hydrolyse des Polycarbonats und anschließender Analyse des Hydrolysates per HPLC. Die Verbindung wurde durch Kernmagnetresonanzspektroskopie charakterisiert.

### Gehalt an THPE

Die Bestimmung der Konzentration von THPE erfolgt nach alkalischer Hydrolyse des Polycarbonats und anschließender Analyse des Hydrolysates per HPLC. Die Kalibrierung erfolgt mit externem Standard.

### YI, und Nachvergilbung (ΔYI)

Die Bestimmung der optischen Eigenschaften der erfindungsgemäßen Formmassen geschieht durch Messung des sogenannten Yellowness-Index (YI) an Normprüfkörpern nach ASTM E313. Diese Normprüfkörper sind Farbmusterplatten (60* 40* 4 mm), die aus den SPC-Zusammensetzungen bei einer Massetemperatur von 300 °C und einer Werkzeugtemperatur von 90 °C hergestellt wurden. Die Nachvergilbung (ΔYI) wird bestimmt als die Differenz aus dem gemessenen YI-Wert der spritzfrischen Farbmusterplatten und dem gemessenen YI-Wert derselben Farbmusterplatten nach Thermolagerung.

### Thermolagerung

Bei den Beispielen 11, 12, 22 - 24 (s.u.) wurde in einer Thermolagerung auf die Verfärbung (Vergilbung) geprüft. Hierzu werden Normprüfkörper aus Polycarbonat (60x40x4 mm) in einem Umluftofen für 1000 h bei 135°C gelagert. Anschließend wird der YI nach ASTM E313 bestimmt. Die Differenz zur Nullprobe (vor Lagerung) wird berechnet (=ΔYI 1000 h).

### Basisharze ohne Additive

SPC wurde in einem mehrstufigen Verfahren hergestellt. Zunächst wurden die Eingangsstoffe BPA, DPC (9000,1 g), Tetraphenylphosphoniumphenolat (0,7 g) und THPE in einem Rührkessel bei ca. 190 °C aufgeschmolzen und nach Aufschmelzen 45 min gerührt. Die eingesetzte Menge an BPA wurde so gewählt, dass ein DPC/BPA-Verhältnis auf Basis der Stoffmengen von 110, 108 oder 107 mol-% bezogen auf BPA zu Beginn der Reaktion eingestellt wurde. Der Gehalt an THPE wurde relativ zu BPA auf Basis der Stoffmengen so gewählt, dass 0,3; 0,4 oder 0,5 mol-% bezogen auf BPA an THPE dosiert wurden. Die Zusammensetzung für das jeweilige Beispiel findet sich in Tabelle 1.

### Reinigung von Metallionen-haltigem 1,1,1-Tris(4-hydroxyphenyl)ethan (THPE):

In einer Glassäule wird ein sulfonsaurer Ionenaustauscher (Lewatit K1221, Lanxess AG) bei Raumtemperatur min vollentsalztem Wasser elektrolytfrei gewaschen, wobei der Volumenstrom konstant bei 0,3ml Wasser/ml Ionentauscher pro Stunde gehalten wird. Nach 24 h beträgt die Leitfähigkeit im Ablauf der Säule 7 µS/cm. Die flüssige Wasserphase wird abgelassen und der Ionenaustauscher mit Methanol beaufschlagt.

Anschließend wird der elektrolytfrei gewaschene Ionenaustauscher bei Raumtemperatur so lange mit Methanol gespült, bis der Wassergehalt im methanolischen Ablauf der Säule kleiner als 0,5 Gew.-% ist. Dabei wird der Volumenstrom konstant bei 0,3 ml Methanol/ml Ionentauscher pro Stunde gehalten. Der so auf Methanol konditionierte Ionenaustauscher wird für die Reinigung von Lösungen, die 1,1,1-Tris(4-hydroxyphenyl)ethan (THPE) enthalten, eingesetzt.

Über den so konditionierten Ionenaustauscher wird bei Raumtemperatur eine 20 Gew.-%ige methanolische THPE-Lösung gegeben. Der Ionenaustauscher wird dabei mit einem Volumenstrom von 0,3 ml THPE-Lösung pro ml Ionenaustauscher beaufschlagt. Anschließend wird der Ionenaustauscher zweimal mit Methanol gespült, wobei jeweils das Säulenvolumen des methanolfeuchten Ionenaustauschers als Spülvolumen eingesetzt wird. Der gesamte Säulenablauf wird aufgefangen und im Wasserstrahlvakuum bei 45°C eingeengt, bis eine ca. 50 Gew.-%ige Lösung von THPE in Methanol erhalten wird. Diese methanolische THPE-Lösung wird unter Rühren bei Raumtemperatur in das doppelte Volumen vollentsalztes Wasser gegeben. Der weiße Niederschlag wird abfiltriert und 48 h bei 50°C sowie 48 h bei 65°C im Wasserstrahlvakuum bis zur Gewichtskonstanz getrocknet.
Ausbeute: 96,9 %
Natriumgehalt 1,1,1-Tris(4-hydroxyphenyl)ethan vor Reinigung: 8,3 ppm
Natriumgehalt 1,1,1-Tris(4-hydroxyphenyl)ethan nach Reinigung: 610 ppb

Das eingesetzte THPE wurde bei den erfindungsgemäßen Beispielen 5- 10 und bei PC1 vor dem Einsatz in der SPC-Reaktion am sauren Ionenaustauscher aufgereinigt. Für die nicht erfindungsgemäßen Beispiele 1- 4 wurde kommerziell erhältliches THPE ohne vorherige Aufreinigung verwendet.

Nach einer Reaktionszeit von 45 min bei 190 °C bei Atmosphärendruck unter Stickstoff wird die Reaktionsmischung in die Sumpfvorlage eines Fallfilmverdampfers überführt. Im Fallfilmverdampfer wird ausgehend von einer Temperatur von 190 °C ein Vakuum von ca. 200 mbar angelegt und das Reaktionsgemisch im Kreislauf über ein von außen beheiztes Fallrohr umgepumpt. Die Umpumpmenge pro Zeit wird über die Versuchszeit konstant gehalten und beträgt bei Beginn der Reaktion im Fallfilmverdampfer das Vierfache des in den Fallfilmverdampfer überführten Flüssigkeitsvolumens pro Stunde. Bei der Reaktion entstehendes Phenol wird abdestilliert, an einem Kondensator auskondensiert und so aus dem Reaktionsgemisch entfernt. Nach einer Verweilzeit von 16 min wird der Druck auf 100 mbar herabgesetzt und die Temperatur auf 220 °C erhöht. Das Reaktionsgemisch wird dabei im Kreislauf über das Fallrohr umgepumpt. Nach einer Verweilzeit von 16 min wird der Druck auf 75 mbar herabgesetzt und die Temperatur auf 250 °C erhöht. Das Reaktionsgemisch wird dabei im Kreislauf über das Fallrohr umgepumpt. Nach einer Verweilzeit von 16 min wird der Druck auf 50 mbar herabgesetzt und die Temperatur auf 265 °C erhöht. Das Reaktionsgemisch wird dabei im Kreislauf über das Fallrohr umgepumpt. Nach einer Verweilzeit von 16 min wird das Reaktionsgemisch in einen Scheibenreaktor überführt. Im Scheibenreaktor kondensiert das Reaktionsgemisch bei drehenden Scheiben und einer Temperatur von 270 - 280 °C und einem Druck von 4 - 6 mbar weiter auf, wobei durch die Kondensation gebildetes Phenol kontinuierlich abdestilliert und so aus dem Reaktionsgemisch entfernt wird. Nach 45 min wird der Druck auf 0,5 - 2 mbar reduziert und die Temperatur auf 300 - 310 °C erhöht. Das Gemisch wird so lange unter diesen Reaktionsbedingungen gehalten, bis die gewünschte Endviskosität erreicht wird. Anschließend wird die Polymerschmelze aus dem Scheibenreaktor mit Hilfe einer Zahnradpumpe herausgefördert, über eine Düsenplatte ausgetragen und nach Abkühlung und Erstarren in einem Wasserbad anschließend granuliert.

Tabelle 1 gibt eine Übersicht über die verschiedenen Versuche mit verschiedenen THPE-Qualitäten. Die Beispiele 1-4 sind nicht erfindungsgemäß, die Beispiele 5-10 und PC1 sind erfindungsgemäß. PC1 ist die physikalische Mischung von insgesamt 13 einzelnen Versuchen, die um weniger als ± 0,006 im Eta rel. Wert auseinander liegen. PC1 wurde als Basisharze für die Herstellung der Compounds mit Additiven verwendet (Beispiele 11 - 24, Tabelle 2).

Wie Tabelle 1 zeigt, weisen die nicht erfindungsgemäßen Beispiele 1-4 deutliche höhere Gehalte der Struktur D1 auf von mehr als 450 mg/kg im Gegensatz zu den erfindungsgemäßen Beispielen 5 -10, wo die Gehalte der Struktur D1 kleiner 450 mg/kg liegen. Das Verhältnis von THPE zu D1 ist bei den nicht erfindungsgemäßen Beispielen deutlich kleiner zehn und bei den erfindungsgemäßen Beispielen deutlich größer zehn.

### Beispiele mit Additiven:

Die erfindungsgemäßen Compounds wurden auf einem Extruder ZE25/5 der Fa. Berstorff, Hannover, mit einem Durchsatz von 10 kg/Std. hergestellt. Die Gehäusetemperaturen betrugen 320 °C. Die verschiedenen Additive wurden in Form einer Pulvermischung mit Polycarbonatpulver - 5 Gew.-% bezogen auf die Gesamteinwaage - zudosiert.

### Verwendete Rohstoffe:

**PC 1** ist THPE-verzweigtes Schmelze-Polycarbonat ohne Additive auf Basis von Bisphenol A, DPC (Diphenylcarbonat) und 0,35 Gew.-% Trishydroxyphenylethan (THPE). D1 : 225 ppm. Verhältnis THPE/D1: 15,6. MVR von 3,5 cm³/10 min (300°C/1,2 kg).

**PC 2** ist ein Lösungs-Polycarbonat-Pulver als Hilfsmittel zur Einbringung der Additive in die Compounds ohne Additive auf Basis von Bisphenol A mit einem MVR von 19 cm³/10 min (300°C/1,2 kg). D1 unterhalb der Nachweisgrenze.

| | |
|---|---|
| TPP: | Triphenylphosphin |
| Irgafos 168: | Tris(2,4-tert-butylphenyl)phosphit |
| Trialkylphosphit: | Tris[(3-ethyl-3-oxetanyl)methyl] phosphit |

| | |
|---|---|
| PETS: | Pentaerythrittetrastearat |
| Loxiol G32: | Stearylstearat |
| Tinuvin 329: | 2-(2-Hydroxy-5-t-octylphenyl)benzotriazol |
| Tinuvin 360: | Bis[2-hydroxy-5-tert-octyl-3-(benzotriazol-2-yl)phenyl]methan |
| Hostavin B-cap: | p-Phenylen-bis(methylenmalonsäure)tetraethyl ester |
| Uvinul 3030: | 1,3-Bis[(2-cyano-3,3-diphenylacryloyl)oxy]-2,2-bis[[(2-cyano-3,3-diphenylacryloyl)oxy]methyl]propan |
| Irganox 1076: | n-Octadecyl-3-(3,5-di-t.butyl-4-hydroxyphenyl)-propionat |

Die Tabelle 2 zeigt die Zusammensetzung der hergestellten Compounds, die Schmelzeviskosität bei 320 °C von eta = 100 bis 1000 [1/s], die relative Viskosität und die ΔYI 1000 h am 4 mm Plättchen für ausgewählte Proben. Als Vergleich ist auch das erfindungsgemäße Beispiel 8 mit aufgeführt.

Wie die Daten in Tabelle 2 belegen, haben alle erfindungsgemäßen Beispiel 8 und 11 - 24 eine höhere Schmelzeviskosität bei den verschiedenen Scherraten als die nicht erfindungsgemäßen Beispiele 3 und 4. Dies ist überraschend, da die relative Viskosität und der Gehalt an THPE (Verzweiger) der nicht erfindungsgemäßen Beispiele 3 und 4 vergleichbar mit den Werten für die erfindungsgemäßen Beispiele 8 und 11- 24 sind. Die Daten in Tabelle 2 belegen daher, dass die erfindungsgemäßen Beispiele 8 und 11- 24 mit einem Verhältnis THPE/D1 ≥ 10 deutlich schmelzestabiler sind als die nicht erfindungsgemäßen Beispiele 3 und 4 mit THPE/D1 < 8. Dies ist umso überraschender, als das die Beispiele 12 - 24 Additive enthalten, die in der Regel zu einer erhöhten Fließfähigkeit und damit niedrigeren Schmelzviskosität führen. Dieses Verhalten wurde beispielsweise in der zum Anmeldezeitpunkt noch unveröffentlichten deutschen Offenlegungsschrift DE 10 2009 043512.3 dargelegt. Die Beispiele in Tabelle 2 belegen daher die Überlegenheit des Einsatzes von THPE, dass zuvor am Ionenaustauscher aufgereinigt wurde.

Die Compounds, die Phosphin oder Phosphit und gegebenenfalls ein sterisch gehindertes Phenol enthalten (Beispiele 12, 22 - 24), sind bei der Thermolagerung deutlich stabiler, als das Beispiel 11 1 ohne Additive, abzulesen an den ΔYI 1000 h Werten. Überraschenderweise ist das Beispiel 23 mit einem aromatischen Phosphit dem Beispiel 24, das eine Kombination aus einem Phosphin und n-Octadecyl-3-(3,5-di-t.butyl-4-hydroxyphenyl)-propionat enthält, bezüglich der Vergilbung überlegen. Dies war aufgrund der zum Anmeldezeitpunkt noch unveröffentlichten deutschen Offenlegungsschrift DE 10 2009 043509.3 nicht zu erwarten. In dieser noch unveröffentlichten Offenlegungsschrift sind SPC ohne THPE beschrieben, bei denen die Kombination aus einem Phosphin mit n-Octadecyl-3-(3,5-di-t.butyl-4-hydroxyphenyl)-propionat den besten Schutz vor Vergilbung bei der Thermolagerung liefert und der Verwendung von Irgafos 168 überlegen ist.

**Tabelle 1: Beispiele zur Herstellung von SPC mit unterschiedlichen Mengen und Qualitäten an THPE.**

| Beispiel Nr | Erfindungsgemäß | DPC/ BPA | Mol% THPE | Mw, GPC (UV) [g/mol] | THPE in Produkt [mg/kg] | D1 in Produkt [mg/kg] | Verhältnis THPE/D1 |
|---|---|---|---|---|---|---|---|
| 1 | Nein | 110 | 0,3 | 34510 | 3400 | 739 | 4,6 |
| 2 | Nein | 110 | 0,3 | 45977 | 3600 | 1225 | 2,9 |
| 3 | Nein | 110 | 0,3 | 30436 | 3400 | 467 | 7,3 |
| 4 | Nein | 110 | 0,3 | 33474 | 3500 | 644 | 5,4 |
| 5 | Ja* | 107 | 0,3 | 25414 | 3600 | 183 | 19,7 |
| 6 | Ja* | 107 | 0,3 | 24696 | 3600 | 205 | 17,6 |
| 7 | Ja* | 107 | 0,3 | 25110 | 3500 | 232 | 15,1 |
| 8 | Ja* | 107 | 0,4 | 29984 | 4600 | 127 | 36,2 |
| 9 | Ja* | 107 | 0,5 | 23399 | 5800 | 180 | 32,2 |
| 10 | Ja* | 107 | 0,5 | 26771 | 5700 | 325 | 17,5 |
| | | | | | | | |
| PC1 | Ja* | 108/ 107 | 0,3 | 32867 | 3500 | 225 | 15,6 |

| | | | | | | | |
|---|---|---|---|---|---|---|---|
| * Bei den erfindungsgemäßen Beispielen wurde das THPE vor dem Einsatz in der SPC-Reaktion am Ionenaustauscher aufgereinigt. | | | | | | | |

**Tabelle 2: Bespiele von mit THPE verzweigten SPC mit und ohne Additiven.**

| Beispiel Nr. | 3 | 4 | 8 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|
| Beispiel erfindungsgemäß | Nein | Nein | Ja* | Ja* | Ja* | Ja* | Ja* | Ja* | Ja* | Ja* | Ja* | Ja* | Ja* | Ja* | Ja* | Ja* | Ja* |
| PC1 (%) | | | | 95 | 95 | 95 | 95 | 95 | 95 | 95 | 95 | 95 | 95 | 95 | 95 | 95 | 95 |
| PC2 (%) | | | | 5 | 4,450 | 4,350 | 4,475 | 4,490 | 4,650 | 4,050 | 4,350 | 4,350 | 4,350 | 4,450 | 4,450 | 4,450 | 4,400 |
| TPP (%) | | | | | 0,05 | 0,05 | 0,025 | 0,01 | 0,05 | 0,05 | 0,05 | 0,05 | 0,05 | 0,05 | | | 0,05 |
| Irgafos 168 (%) | | | | | | | | | | | | | | | | 0,05 | |
| Trialkylphosphit (%) | | | | | | | | | | | | | | | 0,05 | | |
| PETS (%) | | | | | 0,4 | 0,4 | 0,4 | 0,4 | 0,2 | 0,8 | 0,4 | 0,4 | 0,4 | | 0,4 | 0,4 | 0,4 |
| Loxiol G32 (%) | | | | | | | | | | | | | | 0,4 | | | |
| Tinuvin 360 (%) | | | | | 0,1 | 0,2 | 0,1 | 0,1 | 0,1 | 0,1 | | | | 0,1 | 0,1 | 0,1 | 0,1 |
| Tinuvin 329 (%) | | | | | | | | | | | 0,2 | | | | | | |
| Hostavin B-Cap (%) | | | | | | | | | | | | 0,2 | | | | | |
| Uvinul 3030 (%) | | | | | | | | | | | | | 0,2 | | | | |
| Irganox 1076 (%) | | | | | | | | | | | | | | | | | 0,05 |
| | | | | | | | | | | | | | | | | | |
| THPE / D1 | 7,3 | 5,4 | 36,2 | 15,6 | 15,6 | 15,6 | 15,6 | 15,6 | 15,6 | 15,6 | 15,6 | 15,6 | 15,6 | 15,6 | 15,6 | 15,6 | 15,6 |
| | | | | | | | | | | | | | | | | | |
| Eta rel. Granulat | 1,281 | 1,291 | 1,283 | 1,289 | 1,293 | 1,293 | 1,291 | 1,291 | 1,291 | 1,287 | 1,288 | 1,287 | 1,290 | 1,290 | 1,302 | 1,305 | 1,292 |
| | | | | | | | | | | | | | | | | | |
| **Schmelzeviskositäten bei 320°C** | | | | | | | | | | | | | | | | | |
| Eta= 100 [1/s] | 154 | 156 | 342 | 258 | 239 | 240 | 229 | 222 | 185 | 180 | 211 | 273 | 232 | 247 | 422 | 503 | 197 |
| Eta= 500 [1/s] | 128 | 128 | 221 | 198 | 191 | 199 | 182 | 185 | 165 | 150 | 183 | 208 | 160 | 221 | 293 | 328 | 146 |
| Eta= 1000 [1/s] | 110 | 109 | 176 | 164 | 160 | 161 | 153 | 153 | 139 | 126 | 153 | 167 | 134 | 175 | 230 | 256 | 120 |
| | | | | | | | | | | | | | | | | | |
| **Thermolagerung** | | | | | | | | | | | | | | | | | |
| Δ YI 1000 h | n.b. | n.b. | n.b. | 25,7 | 18,0 | n.b. | n.b. | n.b. | n.b. | n.b. | n.b. | n.b. | n.b. | n.b. | 17,1 | 7,2 | 8,3 |

| | | | | | | | | | | | | | | | | | |
|---|---|---|---|---|---|---|---|---|---|---|---|---|---|---|---|---|---|
| n.b.: nicht bestimmt. * Bei den erfindungsgemäßen Beispielen wurde das THPE vor dem Einsatz in der SPC-Reaktion am Ionenaustauscher aufgereinigt. | | | | | | | | | | | | | | | | | |

## Patentansprüche

1. Aromatische verzweigte Polycarbonate, hergestellt durch Umesterung von Bisphenolen mit Diarylcarbonaten im Schmelzeumesterungsverfahren unter Verwendung von Verzweigern, **dadurch gekennzeichnet, dass** das Verhältnis von eingebauten Verzweigern zur Summe der Verbindung D im Schmelze-Polycarbonat von 8 bis 200 liegt und dass die Struktur D gemäß der unten angegebenen Formel 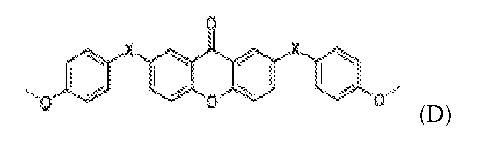 ist, und der Gehalt an D ≥ 5 und ≤ 450 mg/kg ist,
wobei X für eine Einfachbindung, C1- bis C6-Alkylen, C2- bis C5-Alkyliden oder C5- bis C6-Cycloalkyliden, welches mit C1- bis C6-Alkyl, vorzugsweise Methyl oder Ethyl substituiert sein kann, steht.

2. Zusammensetzung enthaltend wenigstens ein Polycarbonat gemäß Anspruch 1 und wenigstens eine organische Phosphorverbindung ausgewählt aus der Gruppe der Phosphine, Phosphite, Diphosphite und Phosphate.

3. Zusammensetzung gemäß Anspruch 2, wobei das Phosphin folgende Struktur aufweist: 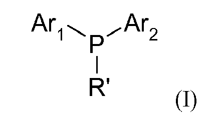 wobei Ar₁ und Ar₂ gleiche oder unterschiedliche unsubstituierte oder substituierte Arylreste sind und
R' ein unsubstituierter oder substituierter Arylrest oder einer der folgenden Reste (la) bis (Ih) ist 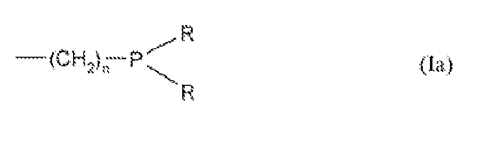 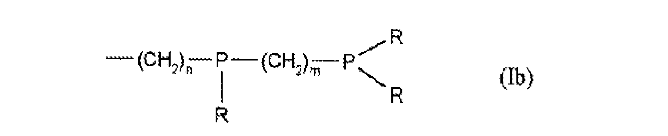 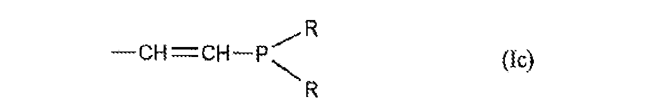 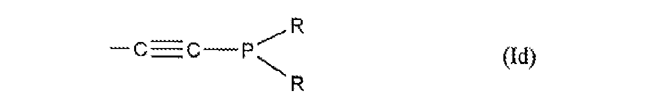 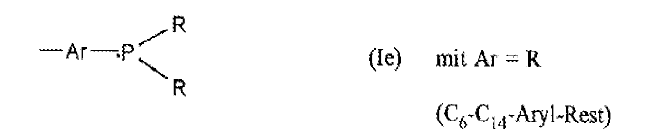 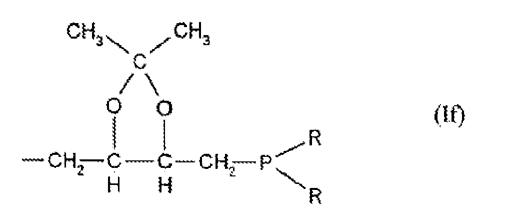 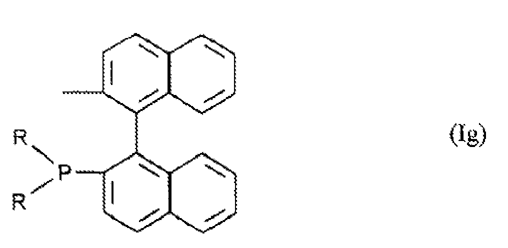 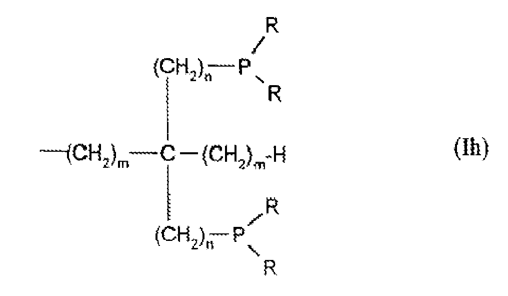 in denen R ein unsubstituierter oder substituierter C₆-C₁₄₋Aryl-Rest ist und, n und m jeweils unabhängig voneinander eine ganze Zahl von 1 bis 7 sind und wobei die H-Atome der Reste (Ia) bis (Ic) noch durch Substituenten ersetzt sein können und wobei R' noch 4-Phenyl-phenyl oder α-Naphthyl sein kann, wenn Ar₁ und Ar₂ in Formel (I) jeweils ebenfalls 4-Phenyl-phenyl oder α -Naphthyl sind und wobei die 4-Phenyl-phenyl- und die α-Naphthyl-Reste substituiert sein können.

4. Zusammensetzung gemäß Anspruch 3, wobei das Phosphin Triphenylphosphin ist.

5. Zusammensetzung gemäß Anspruch 2 oder 3, wobei das Phosphit Tris(2,4-tert-butylphenyl)phosphit ist.

6. Zusammensetzung gemäß einem der Ansprüche 2 bis 5, **dadurch gekennzeichnet, dass** die Zusammensetzung weiterhin aliphatische Carbonsäureester der allgemeinen Formel (III) enthält:
(R₄-CO-O)ₒ-R₅-(OH)ₚ mit o = 1 bis 4 und p = 3 bis 0 (III)
wobei R₄ ein aliphatischer gesättigter oder ungesättigter, linearer, cyclischer oder verzweigter Alkylrest ist und R₅ ein Alkylenrest eines 1- bis 4-wertigen aliphatischen Alkohols R₅-(OH)ₒ₊ₚ ist.

7. Zusammensetzung gemäß einem der Ansprüche 2 bis 6, **dadurch gekennzeichnet, dass** die Zusammensetzung zusätzlich einen UV-Absorber aus der Gruppe der Benzotriazole, der Triazine, der Cyanacrylate oder der Malonester enthält.

8. Zusammensetzung gemäß einem der Ansprüche 2 - 7, **dadurch gekennzeichnet, dass** die Zusammensetzung zusätzlich ein aromatisches Antioxidants enthält.

9. Zusammensetzung gemäß Anspruch 8, **dadurch gekennzeichnet, dass** das aromatische Antioxidants n-Octadecyl-3-(3,5-di-t.butyl-4-hydroxyphenyl)-propionat ist.

10. Verfahren zur Herstellung von Polycarbonaten nach Anspruch 1, **dadurch gekennzeichnet, dass** die eingesetzten Verzweiger vor dem Einsatz im Schmelzepolykondensations-Verfahren einer zusätzlichen Reinigung unterzogen worden sind.

11. Verfahren nach Anspruch 10, **dadurch gekennzeichnet dass** die eingesetzten Verzweiger zuvor in Lösung mit einem Kationenaustauscher behandelt wurden.

12. Verfahren nach einem der Ansprüche 10 oder 11, **dadurch gekennzeichnet**, das als Verzweiger 1,1,1-Tris(4-hydroxyphenyl)ethan (THPE) eingesetzt wird.

13. Verfahren zur Herstellung eines Polycarbonats nach einem der Ansprüche 10 bis 12 bei
dem als Katalysator solche der allgemeinen Formel (VII) 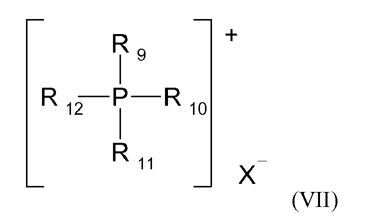 worin
R₉, R₁₀, R₁₁ und R₁₂ unabhängig voneinander die gleichen oder verschiedene C₁- bis C₁₈-Alkylene, C₆ bis C₁₀-Aryle oder C₅ bis C₆-Cycloalkyle bezeichnen können und X- für ein Anion stehen kann, bei dem das entsprechende Säure-Base-Paar H⁺ + X⁻ → HX ein pK_{b} von < 11 hat.
